(19) Europäisches Patentamt
European Patent Office
Office européen des brevets

(11) **EP 4 290 424 A1**

(12) **EUROPEAN PATENT APPLICATION**

(43) Date of publication:
**13.12.2023 Bulletin 2023/50**

(21) Application number: **23178039.6**

(22) Date of filing: **07.06.2023**

(51) International Patent Classification (IPC):
**G06N 10/60** (2022.01)

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.06.2022 US 202217837469**

(71) Applicant: **Multiverse Computing S.L.**
**20014 Donostia / San Sebastián (ES)**

(72) Inventors:
• **Orús, Román**
**20014 Donostia / San Sebastián (ES)**
• **Bermejo, Pablo**
**20014 Donostia / San Sebastián (ES)**

(74) Representative: **Harrison, Robert John et al**
**Sonnenberg Harrison Partnerschaft mbB**
**Herzogspitalstraße 10a**
**80331 München (DE)**

(54) **QUANTUM-INSPIRED METHOD AND SYSTEM FOR CLUSTERING OF DATA**

(57)    A computer-implemented method for establishing clusters for a set of data points in a data set is described. The method comprises in a first step a building of a cost function for the data points in the form of a Hamiltonian, followed by creating from the cost function a tensor network comprising a plurality of tensors. The tensor network is subsequently passed to a processor for performing algebraic operations on the tensors in the tensor network using the processor to update iteratively the tensors in the tensor network. Finally, the method comprises outputting the updated tensors. The cluster into which the data points are clustered and be determined from the parameters of the updated tensors in the tensor network.

EP 4 290 424 A1

| |
|---|
| S200 Start |
| S205 Input data set |
| S207 Calculate Euclidean distance |
| S210 Build cost function |
| S215 Create tensor network |
| S220 Select initial tensor |
| S225 Pass cost function to processor |
| S230 Algebra operations |
| S235 Update coefficients of tensor |
| S240 Check update of the coefficients |
| S245  Check overall criterion |
| S250 Check convergence criterion |
| S255 Change precision parameters |
| S260 Output values |

Fig 2

## Description

## Cross-Reference to Related Applications

This application claims priority to and benefit of U.S. Patent Application No 17/837,469 filed on 10 June 2022.

## Field of the Invention

The field of the invention relates to a method and system for clustering of data.

## Background of the invention

Machine learning (ML) is the development of computer algorithms that can improve automatically through experience and using large collections of data. The machine learning algorithms construct a model based on sample data, known as training data, to make predictions or decisions based on new sets of data without being explicitly programmed to do so. The machine learning algorithms are used in a wide variety of applications, such as in medicine, email filtering, speech recognition, process engineering and computer vision, where it is difficult or unfeasible to develop conventional algorithms to perform the needed tasks.

Machine learning approaches are essentially divided into three broad categories of approaches which depending on the nature of the feedback available to the learning system. In supervised learning approaches, the training model for the algorithm is presented with example inputs to which labels have been attached and their desired outputs. The goal of the supervised learning model is to learn a general rule that maps input data to outputs.

In unsupervised learning approaches, no labels are given to the data used in the learning algorithm and the learning algorithm attempts to find structure in the input data. The unsupervised learning can be used for discovering hidden patterns in data or for identifying and learning new features in the data.

Reinforcement learning uses a computer program interacting with a dynamic environment in which the computer program must perform a certain goal. As the computer program navigates through its problem space, the learning algorithm for the model is provided with feedback in the form of rewards and the learning algorithm tries to maximize the rewards.

These three approaches are used extensively for different application and a focus area relies on improving the different machine learning algorithms based on a training procedure. There are times in which there is no clue for patterns in the data set to be studied, and there is no indication to relate the data set to any other previously known data set. It is expected that as society gathers more data, this type of opaqueness will increase.

There is therefore a need to develop methods and systems to process the data sets and identify patterns within the data sets. One of the ways to identify patterns within the data sets is clustering. The concept of clustering includes a task of dividing a population or data points in the datasets into a number of different clusters based on similarities among the properties of the data points. In other words, the clustered data points in one of the clusters are like the data points in the same cluster and dissimilar to the data points in other ones of the clusters.

The concept of clustering has many applications in the field of data mining, such as in surveillance, intrusion detection in cyber security, fraud detection for credit cards, insurance or health care, industrial processes, and fault detection in safety critical systems.

Quantum-inspired methods of data clustering are known in the art. For example, US Patent No. US 8,874,412 (Weinstein et al) teaches the clustering of a set of data points. Initial states are defined, where each of the initial states is centered on a corresponding one of the data points. A potential function is determined such that a quantum mechanical ground state of the potential function is equal to a sum of the initial states. A trajectory for each of the data points is computed according to quantum mechanical time evolution of the initial states in the potential function.

US Patent No 10,169,445 (Weinstein et al) teaches another method of clustering data by pre-processing a set of data points. Initial states are defined, where each of the initial states is centered on a corresponding one of the data points. A potential function is determined such that a quantum mechanical ground state of the potential function is equal to a sum of the initial states. A trajectory for each of the data points is computed according to quantum mechanical time evolution of the initial states in the potential function. Information derived from the trajectories is displayed.

US Patent No 11,288,540 (Mandal et al) teaches a method which involves receiving a set of data points for an integrated clustering and outlier detection and receiving a user input that indicates a number of outlier data points to be detected from the received set of data points, and thus ensures simple and efficient operation of the optimization solver machine.

## Brief Summary of the invention

The method and system set out in this document describe a clustering for data in a data set and processing the data using a hybrid quantum and quantum-inspired approach. The idea is to express the clustering problem in terms of a geometric optimization, which is subsequently solved using tensor network optimization methods, possibly enhanced by quantum algorithms in some key linear algebra manipulations.

In one aspect, a computer-implemented method for establishing clusters for a set of data points in a data set is described. The method comprises in a first step a calculating in a central processing unit distances between the data points in the data set. In a following step the method comprises a building in the central processing unit a cost function representing distances between the data points in the form of a Hamiltonian, followed by creating from the cost function a tensor network comprising a plurality of tensors. The tensor network is subsequently passed to a processor for performing algebraic operations on the tensors in the tensor network using the processor to update iteratively the tensors in the tensor network. Finally, the method comprises outputting the updated tensors. The cluster into which the data points are clustered and can be determined from the parameters of the updated tensors in the tensor network.

The performing of the algebraic operations on the tensors has the goal of establishing an energy minimum for the tensor network.

The method can be concluded during the iterative updating of the tensors concludes when one of the following conditions is reached: all of the coefficients of the tensors have been updated at least once, a predefined number of iterations or a convergence criterion is reached. It is also possible to change precision parameters of the tensor network.

The method can be used for clustering datasets of at least one of financial data, sensor data, vision data, language processing data, or health data.

A system for establishing clusters for a set of data points in a data set is also disclosed. The system comprises a data storage unit for storing the data set, a central processing unit for calculating the distances (e.g., Euclidean distances) between the data points in the data set and building a cost function representing the distances between the data points in the form of a Hamiltonian. The system further comprises a processor (e.g., a quantum emulator) provided for receiving the cost function from the central processing unit and solving the cost function to identify a minimum in the cost function. The processor could be a quantum annealing processor.

A use of the system for establishing clusters for a set of data points in a data set is also disclosed. The data sets are at least one of financial data, sensor data, vision data, language processing data, or health data.

## Description of the figures

Fig. 1 shows an overview of a computing system for implementing the method of this document.
Fig. 2 shows the method of this document.

## Detailed description of the invention

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

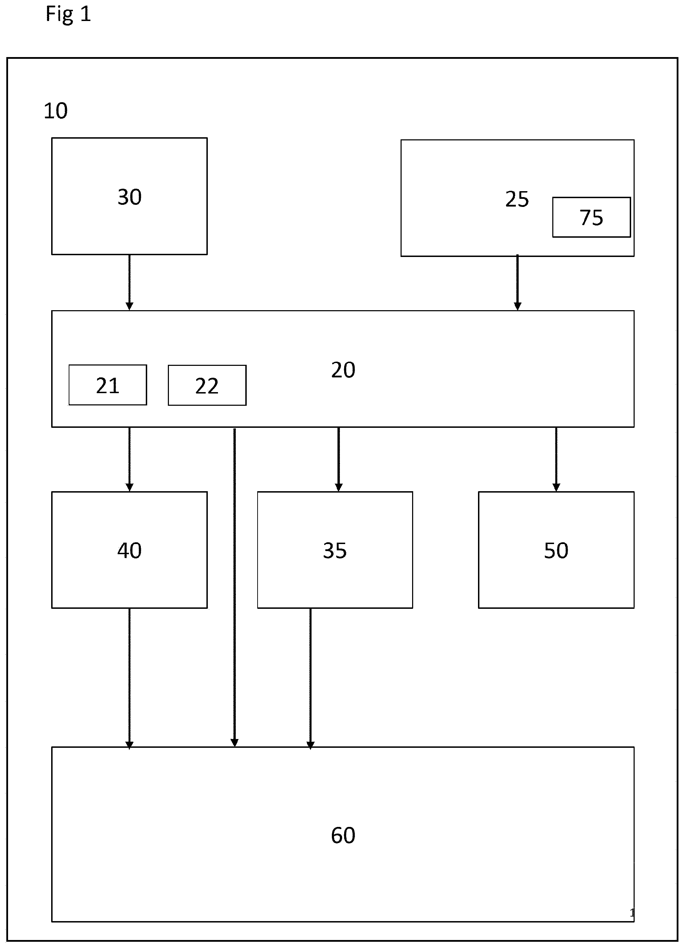

Fig. 1 shows an overview of a computing system 10 for implementing the method of this document. The computing system 10 is a hybrid quantum and classical system and comprises, in an example, a central processing unit 20 which is connected to a data storage unit 25 (i.e., one or more memory devices), and input/output devices 30. A graphics processing unit 35 for processing vector calculations and a field programmable gate array (FGPA) 40 for control logic are connected to the central processing unit 20. A quantum processor 50 (also termed quantum accelerator) is connected to the central processing unit 20. The data storage unit 25 comprises one or more memory devices 75, such as solid-state memory or disk memory, that can store a data set that is used for storing the data on which the method is run.

In one implementation of the computing system 10, the quantum processor 50 can be a noisy intermediate-scale quantum processor, but this is not limiting of the invention. The computing system 10 is connected to a computer network 60, such as the Internet. It will be appreciated that the computing system 10 of Fig. 1 is merely exemplary and other units or elements may be present in the computing system 10. It will also be appreciated that there may be many input/output (I/O) devices 30 located at multiple locations and that there may be a plurality of data storage units 25 also located at multiple locations. The many I/O devices and data storage units 25 are connected by the computer network 60.

In this document, the structure of data stored in the data storage unit 25 is assumed to be unknown or opaque. The data set could be, for example, two-dimension or more dimensional data relating to medical statistics, industrial processes, financial data, or be an unstructured data set. The idea behind the method is to express the clustering problem in terms of a geometric optimization, which is subsequently solved using tensor network optimization methods, and can be enhanced by using quantum algorithms in some linear algebra manipulations.

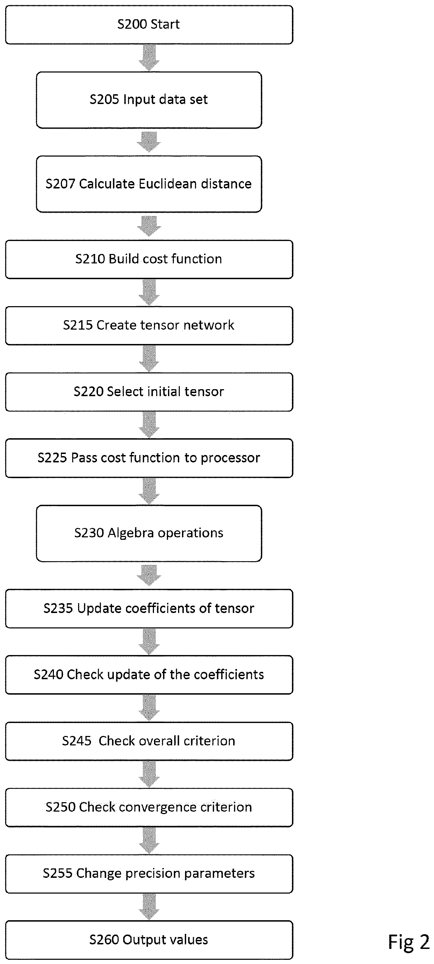

Fig. 2 shows a flow diagram of the method.

The method starts at step S200, and a data set is input in step S205 into the data storage unit 25. The data set can be unstructured, and it is possible that nothing is known about the properties of data points in the data set. This data set is opaque and, at least in some case, there is no possibility to use a pre-trained data to predict the behavior of the data set input in step S205.

Non-limiting examples of such data sets are two-dimensional or more-dimensional distributions of certain characteristics. For example, the data sets could include financial data to enable conclusions to be drawn from the clusters. Another non-limiting example would be in finance in which the financial data set is the set of points of all taxpayers in a given geometrical space, so that it would be possible to cluster the data points into different groups and detect therefore anomalies that could correspond to potential tax-fraudsters. Another example could be in artificial vision systems, in which technical data points (or vision data points) correspond to different objects are clustered together corresponding to specific visual patterns (e.g., faces, books, etc.).

This system could also be implemented in autonomous vehicles to recognize different agents (pedestrians, traffic lights...) and take subsequent decisions automatically. Another example could be speech data from speech recognition systems, where the input corresponds to words and the speech data could be aggregated in a geometrical space so that, for instance, different words correspond to different linguistic elements such as nouns, verbs, and so on are identified and the correct context chosen.

Yet another non-limiting example of the system of the method of the present document could be a cybersecurity system based on an intrusion detection system for monitoring suspicious activities and generate alerts when the suspicious activities are detected. Suspicious activities include malware, such as viruses, worms, Trojans, ransomware, and spyware which can infect computers and networks, and thus compromise the security of the computers and the networks and allowing unauthorized access or control of the computers and networks. Other suspicious activities include phishing attacks or denial of service (DoS) and Distributed Denial of Service (DDoS) attacks. The phishing attacks involve the use of deceptive emails, messages, or websites to trick users into providing sensitive information like passwords, credit card details, or personal data. The DoS and the DDoS attacks aim to overwhelm a system or network with an excessive amount of traffic or requests, rendering it unavailable to legitimate users.

Finally, cybersecurity systems need to monitor vulnerabilities or software flaws. The cybersecurity systems must constantly address vulnerabilities in software, hardware, or network configurations. These vulnerabilities and software flaws can be exploited by attackers to gain unauthorized access or control.

The method set out in this document is to endeavor to obtain insights into the data set and the information in the form of the data points, including technical data points, contained within this data set. One insight is obtained by performing clustering on the data points in the data set in such a way that the data points within the data set are assigned to one and only one possible family of data points (also termed a "cluster"). Commonly, this relationship between the data points is based in the proximity of the data points (e.g., measured as a Euclidean distance or other type of distance) belonging to the same family. The Euclidean distance between the data points in the dataset is calculated in step S207.

To find an optimum configuration of a given system, it is necessary to build in step S210 a cost function having a minimum at the point in which the configuration of the system is optimum. In other words, one must quantify the data in the data set and shape a function capable of serving as a route map for the data points in the data set to end up belonging to the families/clusters that minimize the cost function.

The cost function to establish this minimum is constructed according to the distances between the different ones of the data points and representing the data points in a geometric space.

The cost function is a Hamiltonian structure which is designed to perform clustering on the data set and can be constructed in the central processing unit. The Hamiltonian takes the following form for this specific algorithm using tensor networks:

$$ H = \sum_{i>j}^{N} d\big(x_i, x_j\big) h\big(n_i, n_j\big) $$

This represents the processing of clustering the data points $x_i$ with $i = \in [1, N]$, d(xi, xj) is the distance between two data points and N is the total number of data points,

The two-body operator $h(n_i, n_j)$ is defined as

$$ h\big(n_i, n_j\big) = \begin{cases} \delta_{n_i, n_j}, & if\ d\big(x_i, x_j\big) \le \epsilon \\ 1 - \delta_{n_i, n_j}, & if\ d\big(x_i, x_j\big) > \epsilon \end{cases} $$

with $n_j$ = 0,1, ..., $k$ - 1 = and is a variable for each data point $i$ labelling the cluster to which it belongs, $k$ is the number of clusters, and $\varepsilon$ a distance cutoff that is a fine-tuning parameter to define the geometric size of the cluster and can, if required, be set by the user or automatically to adjust the size of the clusters.

The cost function H above is a particular case of a Potts model which is defined in terms of Potts variables $n_i$ that label the different clusters of the data points. The cost function is developed such that the data points $i$ which are sufficiently close tend to be in the same cluster. The data points $i$ which are far away from each other tend to be in different clusters. The ground state of the model provides the cluster label $n_i$ for each data point $x_i$. This clustering depends on value of the fine-tuning parameter $\varepsilon$. The fine-tuning parameter defines the size of the clusters. Notice also that this cost function can be fine-tuned in different ways, by adding different types of regularization parameters.

The cost function H can be optimized using a method based on tensor networks (TN) that can be accelerated using the quantum processor 50. The method is based on two main modules which can be implemented in one or more of the "classical" central processing units 20, the graphics processing unit 35, the field programmable gate array 40, and/or the quantum processor 50. It will be appreciated that an emulator can be used instead of a true quantum processor.

The first module is a solver module 21, and the second module is an update module 22. The solver module 21 admits as an input the description of the cost function H and has as an output a proposal for solution. The solver module 21 comprises different internal steps.

In a first step S215, an initial tensor network (TN) representing the lowest-cost configuration of the cost function H is created and stored in the data storage unit 25. The lowest-cost configuration of the cost function will be the ground state of the cost function H in which the eigenvector of H has the lowest eigenvalue. This TN is a representation of a vector in a multidimensional vector space which is spanned by all possible configurations of the problem variables. The TN has an inner structure in terms of tensors correlated in some specific way. The specific TN is chosen according to the peculiarities of the problem, such as geometry and expected density of quasi-optimal solutions. A non-limiting example of such a tensor network could be, for instance, a Matrix Product State, or Tensor Train, which corresponds to a one-dimensional array of tensors. Other implementations of the tensor network would involve hierarchical structures such as Tree Tensor Networks, or higher-dimensional structures, such as Projected Entangled Pair States, in which the tensors are arranged according to patterns in more than one dimension. In any of these implementations, the optimization procedures to follow are similar, and vary in detail such as the consideration of loops in the network, and the implementation of different approximation parameters.

In the next step S220, an initial tensor $i$ is chosen. There is generally no preferred initial tensor $i$. The initial tensor $i$ is passed to one of the processors in step S225 and in the following step S230, algebraic operations are carried out on the tensor so that the coefficients of the chosen initial tensor $i$ are updated in step S235 in such a way that the value of the cost function H is minimized. There are different algebraic operations that can be carried out to find the minimum. Non-limiting examples of the algebraic operations include variational, imaginary time evolution and tangent-space methods. In all the options, however, the update makes use always of linear algebra operations such as Singular Value Decomposition (SVD), Exact Diagonalization (ED), Principal Component Analysis (PCA), and Matrix Multiplication (MM). These linear algebra operations are in the prior art the bottleneck of the method, since the linear algebra operations are iteratively repeated many thousands of times throughout the whole algorithm following the three nested loops in the next steps of the solver module 21.

As will be explained later, these manipulations can be implemented on a classical processor (CPU, GPU, FPGA), or on the quantum processor (QPU) 50. The manipulation on the quantum processor 50 offers extra efficiency. This will be explained in detail when the update module 22 is considered.

In the next step S240, a check is carried out to see if all of the tensors in the TN have been updated following a predefined criterion. Usually, this predefined criterion is that all of the tensors in the TN have been updated sequentially once or twice. If the sweep criteria are fulfilled, the method proceeds to the next step S245. If the sweep criteria is not fulfilled, the update module 22 changes the tensor to be updated and proceeds back to step S235.

At the following step S245 a check is carried to see if an overall criterion has been fulfilled. This overall criterion is typically whether the system has reached a predefined number of iterations of the previous steps S230 and S235 or not, or whether certain parameters have reached a predefined convergence or not. If the system has not reached a predefined number of iterations, the system goes back to step S230. If the system has reached a predefined number of iterations, the system continues to step S250.

Finally, in step S250, a check is carried out to see if the system has reached a global predefined convergence criterion, so that the current result may be close to a near optimal solution of the optimization problem. If the system has not reached the global predefined convergence criterion, the system increments precision by changing the precision parameters of the update module in step S255. These precision parameters could be one or more of bond dimension of the TN, unit cell of the TN, number of iterations in the previous steps, Trotter-step in imaginary-time evolution, error tolerance in the linear algebra subroutines, and more. Usually, only TN-dependent parameters are modified.

If the system has reached a global predefined convergence criterion, the system continues and provides an output in step S260 that corresponds to the proposed optimal configuration in the update module 22. This output S260 is carried out by reading the configuration of the variables "n" that minimizes the cost function H. It is possible then to determine in which one of the clusters, each of the data points belong. So, for example, if $n_i = 3$, it means that the data point "i" falls into cluster 3.

The update module 22 comprises subroutines and functions that update the tensors in the step S240 of the solver module 21. These functions involve linear algebra operations such as SVD, ED, PCA, MM, and more. These linear algebra operations can be carried out in either the classical processor, such as a CPU, a GPU, an FPGA, or a combination of all of them, including HPC resources for parallelization and acceleration. Alternatively, the linear algebra operations can be carried out on the quantum processor 50, using quantum linear algebra algorithms such as quantum-SVD, quantum ED, quantum-PCA and quantum-MM. Using the quantum processors 50 at this step allows for more efficiency as compared to classical algorithms, with an exponential improvement for very large objects. In practice, even a tiny acceleration at the step S240 involves a large overall acceleration, since these operations are repeated many times in the system following the procedure in the solver module 21.

It will be appreciated that the two options could work independently (classical or quantum), or also in combination (classical and quantum). The options could also work in individual processors (e.g., CPU, QPU) or in clusters of processors running different operations in parallel (HPC, clusters of QPUs). When running in parallel, the hardware architecture of each individual classical and/or quantum processor 50 could be different or not. For instance, one could use a cluster of QPUs all of them based on superconducting quantum circuits or use a cluster of QPUs with different hardware such as superconducting, photonic, ion-trap and neutral atoms.

Reference Numerals

| 10 | Computing system |
|----|------------------|
| 20 | Central processing unit |
| 21 | Solver module |
| 22 | Update module |
| 25 | Data storage unit |
| 30 | Input/output devices |
| 35 | Graphics processing unit |
| 40 | Field programmable gate array |
| 50 | Quantum processor |
| 60 | Computer network |
| 75 | Memory unit |

**Claims**

1. A computer-implemented method for establishing clusters for a set of data points in a data set stored in a data storage unit (25), the method comprising:

   calculating (S207) in a central processing unit (20) distances between the data points in the data set;
   building (S210) in the central processing unit (20) a cost function representing the distances between the data points in the form of a Hamiltonian;
   creating (S215) from the cost function a tensor network comprising a plurality of tensors;
   passing (S225) the tensor network to a processor (20, 60);
   performing (S230) algebraic operations on the tensors in the tensor network using the processor (20, 60) to update (S235) iteratively the tensors in the tensor network; and
   outputting (S260) the updated tensors.

2. The method of claim 1, wherein the performing (S230) of the algebraic operations on the tensors establishes an energy minimum for the tensor network.

3. The method of any of preceding claims, wherein the iterative updating (S235) of the tensors concludes when all coefficients of the tensors have been updated at least once.

4. The method of any of preceding claims, wherein the iterative updating (S235) concludes after a predefined number of iterations.

5. The method of any of preceding claims, wherein the iterative updating (S235) concludes after reaching (S250) a convergence criterion.

6. The method of any of preceding claims, further comprising changing precision parameters (S255) of the tensor network.

7. The method of any of preceding claims, wherein the data sets are at least one of financial data, sensor data, vision data, language processing data, or health data.

8. A computer program product comprising instructions for implementing the method of claim 1.

9. A system for establishing clusters for a set of data points in a data set, the system comprising:

   - a data storage unit (25) for storing the data set;
   - a central processing unit (20) for calculating (S207) distances between the data points in the data set and building (S210) a cost function representing the distances between the data points in the form of a Hamiltonian;
   - a processor (20, 60) for receiving the cost function from the central processing unit (20) and solving (S230) the cost function to identify a minimum in the cost function.

10. The system of claim 9, wherein the processor (20, 60) is a quantum annealing processor.

11. A use of the system of claim 9 for establishing clusters for a set of data points in a data set, wherein the data sets are at least one of financial data, sensor data, vision data, language processing data, cybersecurity issues, or health data.

Fig 1

Fig 2

Europäisches Patentamt

European Patent Office

Office européen des brevets

# EUROPEAN SEARCH REPORT

Application Number

EP 23 17 8039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MUGEL SAMUEL ET AL: "Dynamic portfolio optimization with real datasets using quantum processors and quantum-inspired tensor networks", PHYSICAL REVIEW RESEARCH, [Online] vol. 4, no. 1, 3 January 2022 (2022-01-03) , XP093083547, DOI: 10.1103/PhysRevResearch.4.013006 Retrieved from the Internet: URL:https://journals.aps.org/prresearch/pdf/10.1103/PhysRevResearch.4.013006> [retrieved on 2023-09-21] * abstract * * page 2 – page 11 * ----- | 1-11 | INV. G06N10/60 |
| A | MICHAEL LUBASCH ET AL: "Unifying projected entangled pair state contractions", NEW JOURNAL OF PHYSICS, INSTITUTE OF PHYSICS PUBLISHING, BRISTOL, GB, vol. 16, no. 3, 14 March 2014 (2014-03-14) , page 33014, XP020258338, ISSN: 1367-2630, DOI: 10.1088/1367-2630/16/3/033014 [retrieved on 2014-03-14] * the whole document * ----- | 1-11 | |
| A | Poggiali Alessandro ET AL: "Quantum Clustering with k-Means", Master Degree, 22 April 2022 (2022-04-22), XP093083521, Retrieved from the Internet: URL:https://etd.adm.unipi.it/theses/available/etd-03212022-125851/unrestricted/tesi.pdf [retrieved on 2023-09-19] * the whole document * ----- | 1-11 | |

| TECHNICAL FIELDS SEARCHED (IPC) |
|---|
| G06N |

The present search report has been drawn up for all claims

| Place of search | Date of completion of the search | Examiner |
|---|---|---|
| The Hague | 26 September 2023 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 83746922
- US 8874412 B, Weinstein
- US 10169445 B, Weinstein
- US 11288540 B, Mandal